# EUROPEAN PATENT SPECIFICATION

(11) **EP 2 096 933 B1**
(45) Date of publication and mention of the grant of the patent: **05.01.2011**
(21) Application number: 07847409.5
(22) Date of filing: 27.11.2007
(51) Int. Cl.: A23C 19/09, A23C 20/00, A23L 1/05, A23L 1/0524, A23L 1/0532, A23L 1/0562, A23L 1/24, A23L 3/3508

(54) **EDIBLE COMPOSITION COMPRISING A CHEESE INGREDIENT AND METHOD OF MANUFACTURING SUCH COMPOSITION**
ESSBARE ZUSAMMENSETZUNG MIT EINEM KÄSEBESTANDTEIL UND VERFAHREN ZUR HERSTELLUNG EINER DERARTIGEN ZUSAMMENSETZUNG
COMPOSITION COMESTIBLE AYANT POUR INGRÉDIENT UN FROMAGE ET PROCÉDÉ DE FABRICATION D'UNE TELLE COMPOSITION

(30) Priority: 20.12.2006 EP 06126603
(43) Date of publication of application: 09.09.2009
(73) Proprietor: Unilever N.V., 3013 AL Rotterdam (NL); Unilever PLC, London EC4Y 0DY (GB)
(72) Inventor: VAN GASTEL, Hubertus Cornelis, 3133 AT Vlaardingen (NL); IHECHERE, Elizabeth, 3133 AT Vlaardingen (NL); VREEKER, Robert, 3133 AT Vlaardingen (NL)
(74) Representative: Rosen Jacobson, Frans Lucas M.
(86) International application number: PCT/EP2007/062882
(87) International publication number: WO 2008/074600

(56) References cited:
- WO-A-95/27409
- GB-A- 2 165 134
- US-A- 4 143 175
- US-A- 4 352 832
- US-B1- 6 238 717
- US-B1- 6 893 675
- US-B2- 6 632 468

## Description

### TECHNICAL FIELD OF THE INVENTION

The present invention relates to an edible composition comprising a cheese ingredient. More particularly, the present invention concerns such an edible composition comprising an aqueous phase having a pH of less than 5.5 and chunks of material containing the cheese ingredient. Also provided is a method for the manufacture of such a composition.

### BACKGROUND OF THE INVENTION

Cheese is widely used as an ingredient in many food products. In some of these food applications cheese is applied in the form of discrete, identifiable pieces. The application of cheese pieces in acidified aqueous food products such as dressings, however, poses a problem, especially if the pH of the product is below 5.5. When cheese is left in contact with an acidic aqueous environment for a prolonged period of time, the cheese looses firmness and/or cohesion, starts to become grainy and/or to separate oil. As a result, storage of natural cheese under acidic conditions inevitably has a detrimental effect on the desirable eating properties of the cheese product.

It is possible to avoid this problem by taking special measures such as those described in US 6,238,717. This US patent describes a process for preparing a packaged cottage cheese product having an increased shelf life, said process comprising:
a. preparing a cottage cheese dressing having 0.05%-0.30% calcium carbonate at a pH of 5.6 to 6.0;
b. preparing a cottage cheese curd at a pH of 4.0 to 4.8;
c. blending the cottage cheese dressing and the cottage cheese curd together to form a cottage cheese product; and
d. packaging the cottage cheese product so that after packaging, the pH of the cottage cheese curd reduces the pH of the cottage cheese product to a range which, during refrigerated storage of the cottage cheese product in the package, will cause the calcium carbonate to slowly be converted to carbonic acid which will then slowly be converted to carbon dioxide sufficient to increase the shelf life and reduce the risk of spoilage of the cottage cheese product compared to cottage cheese not containing calcium carbonate.

The cottage product so obtained is said to have an increased shelf life. In the US patent it is observed that whereas conventional cold cottage cheese has an average shelf life of 20-30 days, the cottage cheese product obtained by the aforementioned process has an average shelf life of 30-40 days or longer at refrigeration temperatures.

An important drawback of the cottage cheese product of US 6,238,717 is that it must be stored in a refrigerator and that even under refrigeration conditions its shelf life is limited. Furthermore, the split stream manufacturing process described in US 6,238,717 is unduly complex.

### SUMMARY OF THE INVENTION

The inventors have found a way to prepare acidified edible compositions containing a transparent aqueous phase having a pH of less than 5.5 and discrete cheese containing pieces that retain desirable eating properties even when stored in direct contact with the acidic transparent aqueous phase under ambient conditions for several months. The inventors have achieved this by employing gelled pieces that contain a substantial amount of cheese ingredient in the form of particles that are suspended within the gel matrix. The taste and texture of these gelled pieces advantageously resembles that of natural cheese. Thus, by employing a gel matrix that is stable under acidic conditions, an ambient stable composition can be prepared that contains an acidic transparent aqueous phase in combination with chunks of material that are essentially indistinguishable from cheese dices. It has also been found that the aqueous phase retains its transparency upon storage of the composition.

US 2006/0062885 describes an imitation cheese composition comprising:
a. moisture in an amount of at least 55 wt.%;
b. an acidulant in an amount such that the pH of the composition is not greater than 4.6;
c. a hydrocolloid for gel-water management;
d. a cheese-derived component in an amount less than 15 wt.%;
e. a cheese flavouring; and
f. a fracturability of 4.9-9.8 N at 21 °C.

Hydrocolloids mentioned in the US patent include agar agar, alginate, carrageenan, gelatine, guar gum, locust bean gum, pectin and xanthan gum. The acidified imitation cheese composition of US 2006/0062885 is said to have a good shelf life, along with good mouthfeel and taste. Furthermore, the composition is sufficiently firm to be sliced, cut, shredded or grated.

US 6,632,468 describes a composite food flavouring and/or texturing product comprising:
a. 3-20 wt.% of at least one gelling agent to produce a gel;
b. 0.1-60 wt.% of at least one flavouring component, such as cheese;
c. 0.1-60 wt.% of at least one texturing component; and
d. 20-65 wt.% water;
wherein the product is a self-sustaining solid at ambient temperature and liquefies or softens when heated. Example 3 of US 6,632,468 describes a diced cheddar product containing water (35 wt.%), rennet casein (15 wt.%), cheddar cheese (10 wt.%), enzyme modified cheese (2.5 wt.%), sodium caseinate (2.5 wt.%) and modified waxy maize starch (6.0 wt.%).

US-A-4,143,175 discloses an acid-stable, heat-reversible cheese-like gel and a process for the preparation thereof.

WO-A-95127409 discloses a shelf-stable, spreadable integrated tomato and cheese-product spread comprising a thermally-processed tomato sauce and at least 20% pieces of processed cheese.

US-A-4,352,832 discloses dressing products which are bacteriologically-stable at room temperature and which possess a pH of at least 4.2.

### DETAILED DESCRIPTION OF THE INVENTION

One aspect of the invention relates to an edible composition comprising:
- at least 35 wt.% of a transparent aqueous phase having a pH of less than 5.5, wherein said aqueous phase has a light transmission of at least 70% using a 1 cm cuvette at wavelength of 400-750 nanometers and at room temperature;
- at least 0.5 wt.% of gelled pieces with a minimum weight of 0.1 g; and
- up to 60 wt.% of one or more additional ingredients;
wherein the gelled pieces comprise a continuous gelled water phase and a dispersed particulate material, wherein the dispersed particulate material comprises at least 30 wt.% of a cheese ingredient selected from the group consisting of cheese, curd, processed cheese and enzyme modified cheese, and wherein the complete composition has not been pasteurized or sterilized.

The gelled pieces contained in the present composition are self sustaining, meaning that they maintain their shape without external support. A wide variety of gelling agents can be used in the preparation of these gelled pieces, provided the texture of the resulting gel matrix is stable under acidic conditions. Examples of suitable gelling agents include proteins, gums, polysaccharides, starches and gel-forming modifications of these biopolymers. According to a preferred embodiment, the gelled water phase of the gelled pieces contains a gelling amount of a biopolymer selected from the group consisting of agar agar, pectin, gelatine, alginate, carrageenan, xanthan, locust bean gum, starch, starch derivatives (such as maltodextrin), whey protein, soy protein, egg protein, pea protein and combinations thereof.

In order to provide gelled pieces that have textural properties that are very similar to those of natural cheese, it is preferred to employ a gelling biopolymer that is capable of forming a gel at low temperatures, e.g. at a temperature below 50°C, or even below 40°C. Thus, the gelled pieces may be prepared without subjecting the cheese ingredient contained therein to elevated temperatures. Some gelling biopolymers, such as agar agar and gelatine, can be dissolved in warm or hot water and will form a gel as soon as the temperature is below the gel setting point. Other gelling agents, such a pectin and alginate, will form a gel if a solution of these biopolymers is cross-linked through the addition of a multivalent metal cation (e.g. Ca²⁺). Exposure to elevated temperatures was found to adversely affect the cheese ingredient component of the gelled pieces. Examples of gelling biopolymers which can advantageously be employed in accordance with the present invention as they form gels at low temperatures include agar agar, pectin, gelatine, alginate and mixtures of these biopolymers.

The gelled pieces within the present edible composition contain a particulate material that is dispersed in a gelled water phase. Typically, the gelled pieces comprise 20-90 wt.% of the gelled water phase and 10-80 wt.% of the dispersed particulate material. The gelled water phase preferably represents 25-80 wt.%, more preferably 30-70 wt.% of the gelled pieces. The dispersed particulate material advantageously represent 20-75 wt.%, more preferably 30-70 wt.% of the gelled pieces.

The continuous transparent aqueous phase of the present edible composition advantageously represents 40-98 wt.% of the composition. More preferably, the continuous transparent aqueous phase represents 50-96 wt.% of the edible composition. The gelled pieces are preferably contained in the edible composition in an amount of 3-50 wt.%, more preferably of 4-30 wt.%.

The present invention covers edible compositions that essentially consist of a continuous transparent aqueous phase and the gelled pieces as well as edible compositions that contain additional components, such as oil, spices, herbs, vegetables, meat products etc. Typically, the transparent aqueous phase of the edible composition, the gelled pieces, oil, spices, herbs, vegetables and meat products together represent at least 90 wt.%, more preferably at least 95 wt.% of the total edible composition.

According to a particularly preferred embodiment, the present edible composition is a pourable composition. The term "pourable edible composition" as used herein refers to edible compositions that are readily pourable from a container (e.g. a bottle or a jar) under ambient conditions. Pourable edible compositions, such as dressings, are distinguished from non-pourable compositions, such as mayonnaise. Examples of pourable edible compositions that are encompassed by the present invention include dressings, sauces, soups and condiments. Most preferably, the pourable edible composition is a dressing.

The pourable composition of the present invention advantageously contains a plant material selected from the group consisting of spices, herbs and vegetables. Preferably, in case said plant material are vegetables, the plant material has a mass weighted average diameter of at least 1 mm, more preferably of 2-20 mm. This average diameter is calculated by on the basis of the maximum diameter of each individual particle. According to a particularly preferred embodiment, the present pourable composition contains at least 10 wt.%, preferably at least 20 wt.% of a plant material selected from the group consisting of spices, herbs, vegetables and combinations thereof.

The gelled pieces and other particulate components of the pourable composition preferably sink or remain in suspension during storage of the composition. Most preferably, the composition is designed in such a way that the gelled pieces and any other particulate material contained therein remains in suspension, even if the composition is left under quiescent conditions for one week or more. This may achieved by ensuring that the density of the gelled pieces and other particulate material closely matches the density of the aqueous phase. Typically, the density of the gelled pieces is in the range of 1.0-1.2 g/ml.

The shelf stability of the present edible composition is largely dependent on the pH of the continuous aqueous phase.

In order to minimise the risk of microbial spoilage, it is desirable to employ a pH of less than 5.0 or even of less than 4.5. The present invention offers the advantages that these pH's can be employed without any detrimental effect on the quality of the product, even when the product is stored under ambient conditions for several months. For reasons of taste, the pH of the edible compositions preferably does not go below 3.0.

In order to make the gelled pieces resemble natural cheese as closely as possible, it is preferred that these gelled pieces are not transparent and that they have a colour selected from white, yellow, orange or blends of these colours.

In principle, the gelled pieces contained in the present edible composition may take any shape or form. Preferably, the gelled pieces are cubically or cylindrically shaped. Most preferably, the gelled pieces are cubically shaped. According to another preferred embodiment, the gelled pieces have a weight in the range of 0.2-5g.

As explained herein before, the textural properties of the gelled pieces advantageously resemble those of dices of natural cheese. Accordingly, in a very preferred embodiment, the gelled pieces exhibit a fracture stress of at least 5 kPa, more preferably of at least 10 kPa. Typically, the fracture stress of the gelled pieces does not exceed 350 kPa, preferably it does not exceed 300 kPa.

Furthermore, also the fracture strain of the gelled pieces advantageously resembles that of natural cheese. Thus, according to a preferred embodiment, the gelled pieces exhibit a fracture strain of at least 10%, more preferably of at least 20%. The fracture strains of the gelled pieces usually does not exceed 70%, more preferably said fracture strain does not exceed 60%. The fracture stress and fracture strain of the gelled pieces are determined at 20°C using a Texture Analyser (model TA.XT*PLUS*, Stable Micro Systems, UK). The gelled pieces are cubically shaped (15×15×15 mm³) and compressed uniaxially between two flat plates at a rate of 50 mm/min. The resulting stress-strain curve is used to calculate (true) strain and (true) stress at fracture (see e.g.: M.H. Tunick, Rheology of dairy foods that gel, stretch and fracture, J.Dairy Sci. 83, 2000, pp.1892-1898).

The continuous aqueous phase of the composition is transparent. Thus, in case the edible composition is packaged in a transparent container, the gelled pieces are visible to the naked eye. The transparency of the continuous aqueous phase is reflected in a transmission of at least 70%, more preferably of at least 80%. The transmission as referred to in here is determined by using an Uvikon XL photo-spectrometer (Setomam, Domont Cedex, France) at room temperature. The aqueous phase of the dressing is pipetted into a cuvette of thickness 1 cm and transmission equals the maximum transmission that is measured within a wavelength range of 400-750 nm. It was found that the continuous aqueous phase retains said transparency upon storage of said composition.

The edible composition of the present invention, besides the acidic continuous transparent aqueous phase and the gelled pieces, may suitably contain additional components. Thus, for instance, the composition may suitably contain some fat. Preferably, the composition comprises 0-5 wt.% of a dispersed fat phase. The inclusion of a dispersed fat phase usually produces a milky opaque appearance. As explained, in accordance with a preferred embodiment, when packaged in a transparent container (e.g. 1 litre of edible composition in a glass jar with a diameter of 8 cm), the gelled pieces should be visible to the naked eye. Thus, according to a very preferred embodiment, the edible composition contains less than 0.5 wt.% of a dispersed fat phase.

As explained herein before, it is preferred not to expose the cheese ingredient of the gelled pieces to elevated temperatures. Hence, in accordance with the invention , the complete edible composition has not been pasteurised or heat sterilised. It should be understood, however, that parts of the edible composition excluding the cheese ingredient may have been subjected to pasteurisation or heat sterilisation prior to being combined with the cheese ingredient.

Another aspect of the invention relates to a process for the manufacture of an edible composition as defined herein before, said process comprising the steps of:
- providing a particulate material comprising at least 30 wt.% of a cheese ingredient selected from the group consisting of cheese, curd, processed cheese and enzyme modified cheese;
- combining the particulate material with an aqueous phase and a gelling biopolymer to produce a gel-forming composition;
- promoting gelation of the gel-forming composition to obtain a gelled composition comprising a continuous gelled water phase and dispersed particulate material;
- if the gelled composition is not obtained in the form of gelled pieces, cutting the gelled composition to produce such gelled pieces;
- combining the gelled pieces with an aqueous composition and, if the pH of the resulting product is 5.5 or higher, adjusting the pH to less than 5.5; and
- packaging the resulting edible composition in a sealed container;
wherein the cheese ingredient is not exposed to temperatures in excess of 40 °C during any one of these steps. As explained above, by avoiding temperatures in excess of 40°C, retrogradation of the cheese ingredient is avoided. According to a preferred embodiment, the cheese ingredient is not exposed to temperatures in excess of 35°C, most preferably it is not exposed to temperatures in excess of 30°C.

Gelling biopolymers that particularly suited for use in the aforementioned method include agar agar, pectin, gelatine, alginate and mixtures thereof.

The edible compositions of the present invention are advantageously packaged in a transparent container such as a glass bottle or a glass jar. Naturally, the container may also be made of a transparent plastic such as polyethylene or polyethylene terephtalate.

The invention is further illustrated by means of the following examples.

### Example 1

A shelf-stable acidified dressing comprising small cubes of cheese-like material was prepared as follows:
Water was heated to boiling and agar agar was added under stirring (30 grams per litre). The mixture was stirred under continued heating until the agar agar was completely dissolved.

Next, the solution was cooled to 50°C and grated old Gouda cheese was added under stirring (40 grams of cheese per 60 grams of agar agar solution). The resulting mixture was allowed to gel in a refrigerator. After the mixture had formed a rigid gel, the gel was removed from its container and cut into cubes of 8x8x8 mm.

A dressing was prepared on the basis of the following recipe:

| | % by weight |
|---|---|
| Water | 33.2 |
| White vinegar (12% acetic | 10.0 |
| acid) | |
| Sucrose | 6.5 |
| Sodium chloride | 3.0 |
| Xanthan gum | 0.2 |
| Red bell pepper (diced ± 7 mm) | 8.5 |
| Yellow bell pepper (diced ± 7 | 8,5 |
| mm) | |
| Green olives (diced ± 5 mm) | 7.0 |
| Garlic (chopped ± 4 mm) | 3.0 |
| Capers (whole) | 5.0 |
| White onion (diced ± 5 mm) | 8.5 |
| Gelled cheese containing cubes | 6.0 |
| Potassium sorbate | 0.1 |
| Flavours, colouring agents | 0.5 |
| TOTAL | 100.0 |

First, sorbate, flavours and colouring agent were added to the under continuous stirring water. Next, under stirring, a dry mix of the xanthan gum, sucrose and salt was added, followed by the addition of the vinegar. Subsequently, the vegetable components, which previously had been blanced, were added.

Finally, the gelled cheese containing cubes were added. The resulting mix was gently stirred to obtain a homogeneous suspension, following which it was filled in glass jars.

The product so obtained was found to be shelf stable under ambient conditions for several months. During this storage period the gelled cheese containing cubes retained their integrity and also the texture and taste of these cubes did not change significantly.

### Example 2

Example 1 was repeated except that, instead of grated Gouda cheese, a spreadable processed cheese was added to the agar agar solution at a temperature of 90°C in an amount of 50g processed cheese per 50g of agar agar solution. Again, the dressing so obtained exhibited excellent storage stability and the taste and texture of the gelled cubes did not deteriorate significantly during storage.

### Example 3

Purpose of this example is to show the effect on the extent of turbidity (or transmission) of the aqueous phase by a gelled cheese analogue of the invention (i.e. cheese in a matrix of a biopolymer) as compared to regular cheese.

The following materials were used:
Agar Agar (luxara 1253), from Arthur Branwell & Co
Parmesan Cheese, block from trade
Kitchen salt
Natural vinegar (12% acetic acid)
Phosphoric acid (20% acid)
Sucrose
Potassium sorbate
Sodium benzoate
EDTA

For this example a model oil-free dressing was prepared, which was be used for testing the effect of both the cheese analogue and the natural cheese. The composition of said dressing is as follows:

| | % by weight |
|---|---|
| Water | 85.9 |
| Vinegar (12% acetic acid) | 5.2 |
| Phosphoric acid (20% acid) | 1.7 |
| Sucrose | 4.0 |
| Kitchen salt | 3.0 |
| Potassium sorbate | 0.12 |
| Sodium benzoate | 0.06 |

The measured initial pH of said dressing composition is 2.1. Said composition was prepared at ambient temperature by first dissolving the sorbate, benzoate and EDTA in the water, thereafter adding the vinegar and phosphoric acid and subsequently dissolving the sugar and kitchen salt.

The cheese was prepared as follows.

For testing natural cheese in dressing, Parmesan cheese was cut into cubes of about 8x8x8 mm by using a manual cheese cutter (having a sharp blade). Fine particles and fines from the cheese cubes were then separated by rolling the cubes gently over a metal grid sieve (mesh width 3 mm).

This Parmesan cheese was also used for preparing the gelled cheese analogue. In this case, the cheese was cut into smaller pieces (ca. 5mm) and then frozen at -40°C for 10 minutes in a blast freezer. Subsequently, the cheese was milled into a fine powder in a IKA M20 laboratory mill. Just before this milling step, the cheese was mixed with some dry ice for keeping the temperature low during milling. The milling step was carried out such that high pressures are avoided and the carbon dioxide formed was allowed to evaporate completely before further use of the cheese powder.

A gelled cheese analogue having following composition was prepared:

| | %by weight |
|---|---|
| Water | 64.8 |
| Agar Agar | 2.1 |
| Cheese powder | 30.1 |
| Kitchen salt | 3.0 |

First the Agar Agar was dissolved in the water at about 90°C. Thereafter the salt was added and dissolved and the mixture was then cooled to about 65°C. The cheese powder was then added and the mixture stirred well to avoid formation of dry lumps of powder. The thus-formed solution was poured in aluminum trays (about 8 mm layer) and allowed to cool down in the refrigerator (5°C) so as to enable the gel to form. After at least 30 minutes the trays were taken out of the refrigerator and the gel layers removed. Subsequently, square cubes of 8x8x8 mm were cut from the gel layers.

The final products were prepared as follows.

Glass jars were filled with the following combinations:
(a) 15% wt of the above 8x8x8 mm Parmesan cheese cubes and 85% wt of the above model oil-free dressing composition; and
(b) 15% wt of the above 8x8x8 mm gelled cheese analogue cubes and 85% wt of the model oil-free dressing composition.

The thus-filled jars were stored in a refrigerator at 5°C. Every 2 days, the jars were gently inverted several times for speeding up the state of complete equilibrium between the dressing and the cubes in terms of pH.

After 10 days, the following pH values were measured:
a pH of 4.1 for the natural Parmesan cheese containing product respectively a pH of 3.6 for the gelled cheese analogue containing product.

Furthermore, clear differences in appearance were observed between the two final product samples after equilibration for 10 days. The aqueous phase of the product sample containing the natural Parmesan cheese had become significantly more yellow and more turbid when compared with the product sample containing the gelled cheese analogue.

2.5 ml of the aqueous phase was taken from each of the product samples and pipetted into a cuvette. Transmission of these aqueous phases was measured as a function of wavelength in the range 400-750 nm. It was found that the maximum transmission was 97% for the aqueous phase taken from the product sample containing the cheese analogues, whereas 63% max. transmission was found for the aqueous phase taken from the product sample containing the natural Parmesan cheese.

## Claims

1. An edible composition comprising:
• at least 35 wt.% of a transparent continuous aqueous phase having a pH of less than 5.5, wherein the aqueous phase has a light transmission of at least 70% using a 1 cm cuvette at wavelength of 400-750nm and at room temperature;
• at least 0.5 wt.% of gelled pieces with a minimum weight of 0.1 g; and
• up to 60 wt.% of one or more additional ingredients;
wherein the gelled pieces comprise a continuous gelled water phase and a dispersed particulate material, wherein the dispersed particulate material comprises at least 30 wt.% of a cheese ingredient selected from the group consisting of cheese, curd, processed cheese and enzyme modified cheese, and
wherein the complete composition has not been pasteurized or sterilized.

2. Edible composition according to claim 1, wherein the gelled water phase of the gelled pieces contains a gelling amount of a biopolymer selected from the group consisting of agar agar, pectin, gelatine, alginate, carrageenan, xanthan, locust bean gum, starch, whey protein, soy protein, egg protein, pea protein and combinations thereof.

3. Edible composition according to any one of the preceding claims, wherein the gelled pieces comprise 20-90 wt.% of the gelled water phase and 10-80 wt.% of the dispersed particulate material.

4. Edible composition according to any one of the preceding claims, comprising 3-50 wt.% of the gelled pieces.

5. Edible composition according to any one of the preceding claims, wherein the continuous aqueous phase of the composition has a pH in the range of 3.0-5.0.

6. Edible composition according to any one of the preceding claims, wherein the edible composition is selected from the group consisting of dressings, sauces, soups and condiments.

7. Edible composition according to any one of the preceding claims, wherein the gelled pieces exhibit a fracture stress of at least 5 kPa.

8. Edible composition according to any one of the preceding claims, wherein the composition comprises 0-5 wt.% of a dispersed fat phase.

9. Edible composition according to any one of the preceding claims, wherein the aqueous phase of the edible composition, the gelled pieces, oil, spices, herbs, vegetables and meat products together represent at least 90 wt.% of the composition.

10. Edible composition according to any one of the preceding claims, wherein the gelled pieces have a weight in the range of 0.2-5g.

11. A process for the manufacture of an edible composition according to any one of the preceding claims, said process comprising the steps of:
• providing a particulate material comprising at least 30 wt.% of a cheese ingredient selected from the group consisting of cheese, curd, processed cheese and enzyme modified cheese;
• combining the particulate material with an aqueous phase and a gelling biopolymer to produce a gel-forming composition;
• promoting gelation of the gel-forming composition to obtain a gelled composition comprising a continuous gelled water phase and dispersed particulate material;
• if the gelled composition is not obtained in the form of gelled pieces, cutting the gelled composition to produce such gelled pieces;
• combining the gelled pieces with an aqueous composition and, if the pH of the resulting product is 5.5 or higher, adjusting the pH to less than 5.5; and
• packaging the resulting edible composition in a sealed container;
wherein the cheese ingredient is not exposed to temperatures in excess of 40°C during any one of these steps.

12. Process according to claim 11, wherein the gelling biopolymer is selected from the group consisting of the group consisting of agar agar, pectin, gelatine, alginate and mixtures thereof.

## Patentansprüche

1. Essbare Zusammensetzung, umfassend:
• wenigstens 35 Gewichts-% einer transparenten kontinuierlichen wässrigen Phase, die einen pH von weniger als 5,5 hat wobei die wässrige Phase eine Lichtdurchlässigkeit von wenigstens 70 % unter Verwendung einer 1 cm-Küvette bei einer Wellenlänge von 400-750 nm und bei Raumtemperatur hat;
• wenigstens 0,5 Gewichts-% gelierte Stücke mit einem Mindestgewicht von 0,1 g und
• bis zu 60 Gewichts-% einer oder mehrerer zusätzlicher Ingredienzien;
wobei die gelierten Stücke eine kontinuierliche gelierte Wasserphase und ein dispergiertes partikuläres Material umfassen, wobei das dispergierte partikuläre Material wenigstens 30 Gewichts-% eines Käse-Ingrediens, ausgewählt aus der Gruppe, bestehend aus Käse, Käsebruch, verarbeitetem Käse und enzymmodifiziertem Käse, umfasst und wobei die vollständige Zusammensetzung nicht pasteurisiert oder sterilisiert worden ist.

2. Essbare Zusammensetzung nach Anspruch 1, wobei die gelierte Wasserphase der gelierten Stücke eine gelierende Menge eines Biopolymers, ausgewählt aus der Gruppe, bestehend aus Agar-Agar, Pektin, Gelatine, Alginat, Carrageenan, Xanthan, Johannesbrotkerngummi, Stärke, Molkeprotein, Sojaprotei, Eiprotein, Erbsenprotein und Kombinationen davon, enthält.

3. Essbare Zusammensetzung nach einem der vorangehenden Ansprüche, wobei die gelierten Stücke 20-90 Gewichts-% der gelierten Wasserphase und 10-80 Gewichts-% des dispergierten partikulären Materials umfassen.

4. Essbare Zusammensetzung nach einem der vorangehenden Ansprüche, die 3-50 Gewichtes-% der gelierten Stücke umfasst.

5. Essbare Zusammensetzung nach einem der vorangehenden Ansprüche, wobei die kontinuierliche wässrige Phase der Zusammensetzung einen pH im Bereich von 3,0-5,0 hat.

6. Essbare Zusammensetzung nach einem der vorangehenden Ansprüche, wobei die essbare Zusammensetzung aus der Gruppe, bestehend aus Dressings, Soßen, Suppen und Gewürzmischungen, ausgewählt ist.

7. Essbare Zusammensetzung nach einem der vorangehenden Ansprüche, wobei die gelierten Stücke eine Bruchbelastung von wenigstens 5 kPa aufweisen.

8. Essbare Zusammensetzung nach einem der vorangehenden Ansprüche, wobei die Zusammensetzung 0-5 Gewichts-% einer dispergierten Fettphase umfasst.

9. Essbare Zusammensetzung nach einem der vorangehenden Ansprüche, wobei die wässrige Phase der essbaren Zusammensetzung, die gelierten Stücke, Öl, Gewürze, Kräuter, Gemüse und Fleischprodukte zusammen wenigstens 90 Gewichts-% der Zusammensetzung darstellen.

10. Essbare Zusammensetzung nach einem der vorangehenden Ansprüche, wobei die gelierten Stücke ein Gewicht im Bereich von 0,2 bis 5 g haben.

11. Verfahren zur Herstellung einer essbaren Zusammensetzung nach einem der vorangehenden Ansprüche, wobei das Verfahren die folgenden Schritte umfasst:
• Bereitstellen eines partikulären Materials, das wenigstens 30 Gewichts-% eines Käse-Ingrediens, ausgewählt aus der Gruppe, bestehend aus Käse, Käsebruch, verarbeitetem Käse und enzymmodifiziertem Käse, umfasst;
• Kombinieren des partikulären Materials mit einer wässrigen Phase und einem gelierenden Biopolymer unter Herstellung einer gelbildenden Zusammensetzung;
• Begünstigen einer Gelierung der gelbildenden Zusammensetzung unter Erhalt einer gelierten Zusammensetzung, die eine kontinuierliche gelierte Wasserphase und dispergiertes partikuläres Material umfasst;
• wenn die gelierte Zusammensetzung nicht in Form von gelierten Stücken erhalten wird, Schneiden der gelierten Zusammensetzung unter Herstellung solcher gelierten Stücke;
• Kombinieren der gelierten Stücke mit einer wässrigen Zusammensetzung und wenn der pH des resultierenden Produkts 5,5 oder höher ist, Einstellen des pH auf kleiner als 5,5 und
• Verpacken der resultierenden essbaren Zusammensetzung in einem versiegelten Behälter;
wobei das Käse-Ingrediens keinen Temperaturen von über 40 °C während eines dieser Schritte ausgesetzt wird.

12. Verfahren nach Anspruch 11, wobei das gelierende Biopolymer aus der Gruppe, bestehend aus der Gruppe, bestehend aus Agar-Agar, Pektin, Gelatine, Alginat und Gemischen davon, ausgewählt wird.

## Revendications

1. Composition comestible comprenant :
✔ au moins 35 % en poids d'une phase continue aqueuse transparente dont le pH est inférieur à 5,5, la phase aqueuse présentant une transmission lumineuse d'au moins 70 % mesurée au moyen d'une cuvette d'1 cm à une longueur d'ondes de 400-750 nm et à température ambiante ;
✔ au moins 0,5 % en poids de pièces gélifiées d'un poids minimum de 0,1 g ; et
✔ jusque 60 % en poids d'un ou de plusieurs ingrédients supplémentaires ;
dans laquelle les pièces gélifiées comprennent une phase continue aqueuse gélifiée et une matière particulaire dispersée, dans laquelle la matière particulaire dispersée comprend au moins 30 % en poids d'un ingrédient de fromage sélectionné parmi le groupe composé de fromage, de lait caillé, de fromage traité et de fromage modifié par action enzymatique, et dans laquelle la composition totale n'a pas été pasteurisée ni stérilisée.

2. Composition comestible selon la revendication 1, dans laquelle la phase aqueuse gélifiée des pièces gélifiées contient une quantité de gélification d'un biopolymère sélectionné parmi le groupe composé d'agar-agar, de pectine, de gélatine, d'alginate, de carraghénane, de xanthane, de gomme de caroube, d'amidon, de protéine lacto-sérique, de protéine de soja, de protéine d'oeuf, de protéine de pois et de combinaisons de ceux-ci.

3. Composition comestible selon l'une quelconque des revendications précédentes, dans laquelle les pièces gélifiées comprennent de 20 à 90 % en poids de phase aqueuse gélifiée et de 10 à 80 % en poids de matière particulaire dispersée.

4. Composition comestible selon l'une quelconque des revendications précédentes, comprenant de 3 à 50 % en poids de pièces gélifiées.

5. Composition comestible selon l'une quelconque des revendications précédentes, dans laquelle la phase continue aqueuse de la composition a un pH compris dans la plage allant de 3,0 à 5,0.

6. Composition comestible selon l'une quelconque des revendications précédentes, dans laquelle la composition comestible est sélectionnée parmi le groupe composé d'assaisonnements, de sauces, de soupes et de condiments.

7. Composition comestible selon l'une quelconque des revendications précédentes, dans laquelle les pièces gélifiées présentent une contrainte de fracture d'au moins 5 kPa.

8. Composition comestible selon l'une quelconque des revendications précédentes, dans laquelle la composition comprend de 0 à 5 % en poids d'une phase grasse dispersée.

9. Composition comestible selon l'une quelconque des revendications précédentes, dans laquelle la phase aqueuse de la composition comestible, les pièces gélifiées, l'huile, les épices, les herbes, les légumes et les produits de viandes représentent ensemble au moins 90 % en poids de la composition.

10. Composition comestible selon l'une quelconque des revendications précédentes, dans laquelle les pièces gélifiées ont un poids compris dans la plage allant de 0,2 à 5 g.

11. Procédé pour la fabrication d'une composition comestible selon l'une quelconque des revendications précédentes, ledit procédé comprenant les étapes consistant à :
✔ fournir une matière particulaire comprenant au moins 30 % en poids d'un ingrédient de fromage sélectionné parmi le groupe composé de fromage, de lait caillé, de fromage traité et de fromage modifié par action enzymatique ;
✔ combiner la matière particulaire avec une phase aqueuse et un biopolymère gélifiant afin de produire une composition formant un gel ;
✔ promouvoir la gélification de la composition formant un gel afin d'obtenir une composition gélifiée comprenant une phase continue aqueuse gélifiée et une matière particulaire dispersée ;
✔ si la composition gélifiée n'est pas obtenue sous la forme de pièces gélifiées, découper la composition gélifiée afin de produire lesdites pièces gélifiées ;
✔ combiner les pièces gélifiées avec une composition aqueuse et, si le pH du produit obtenu est supérieur ou égal à 5,5, ajuster le pH à moins de 5,5 ; et
✔ emballer la composition comestible obtenue dans un récipient étanche ;
selon lequel l'ingrédient de fromage n'est pas exposé à des températures supérieures à 40°C pendant l'une quelconque de ces étapes.

12. Procédé selon la revendication 11, selon lequel le biopolymère gélifiant est sélectionné parmi le groupe composé d'agar-agar, de pectine, de gélatine, d'alginate et de mélanges de ceux-ci.
